# EUROPÄISCHE PATENTSCHRIFT

(11) **EP 2 659 950 B1**
(45) Veröffentlichungstag und Bekanntmachung des Hinweises auf die Patenterteilung: **06.04.2016**
(21) Anmeldenummer: 13001883.1
(22) Anmeldetag: 11.04.2013
(51) Int. Cl.: B01D 53/94, F01N 3/20, F01N 3/022, F01N 3/023, F01N 3/035

(54) **Abgasnachbehandlungssystem**
Exhaust gas finishing treatment system
Système de traitement postérieur de gaz d'échappement

(30) Priorität: 02.05.2012 DE 102012008523
(43) Veröffentlichungstag der Anmeldung: 06.11.2013
(73) Patentinhaber: MAN Truck & Bus AG, 80995 München (DE)
(72) Erfinder: Döring, Andreas, 82008 München (DE)

(56) Entgegenhaltungen:
- EP-A1- 1 892 396
- EP-A1- 2 154 343
- EP-A1- 2 166 203

## Beschreibung

Gegenstand der Erfindung ist ein Abgasnachbehandlungssystem für Brennkraftmaschinen, insbesondere Dieselmotoren und Benzinmotoren mit Direkteinspritzung, gemäß dem Oberbegriff des Anspruches 1.

Neben Feststoffpartikeln gehören Stickoxide zu den limitierten Abgaskomponenten, die während Verbrennungsvorgängen entstehen und deren erlaubte Emissionen immer weiter abgesenkt werden. Zur Minimierung dieser Abgaskomponenten bei in Kraftfahrzeugen betriebenen Brennkraftmaschinen werden heute unterschiedliche Verfahren eingesetzt. Die Verringerung der Stickoxide geschieht meist mit Hilfe von Katalysatoren, in sauerstoffreichem Abgas ist zusätzlich ein Reduktionsmittel erforderlich, um die Selektivität und die NOₓ -Umsätze anzuheben. Bekannt geworden sind diese Verfahren unter dem Sammelbegriff SCR-Verfahren, wobei SCR für "selektive katalytische Reduktion" steht. Ihr Einsatz erfolgt seit vielen Jahren im Kraftwerksbereich und in jüngster Zeit auch bei Brennkraftmaschinen. Eine ausführlich Darstellung solcher Verfahren ist der DE 34 28 232 A1 zu entnehmen. Als SCR-Katalysatoren können V₂O₅-haltige Mischoxide, beispielsweise in der Form V₂O₅/WO₃/TiO₂, verwendet werden. Typische V₂O₅-Anteile liegen dabei zwischen 0,2-3%. Als Reduktionsmittel kommen in der praktischen Anwendung Ammoniak oder Ammoniak abspaltende Verbindungen, wie Harnstoff oder Ammoniumformiat, in fester oder Lösungsform zum Einsatz. Für die Umsetzung von einem Mol Stickstoffmonoxid ist dabei ein Mol Ammoniak notwendig.

4NO+4NH₃+O₂ ⇒ 4N₂ +6H₂O (1)

Wird den SCR-Katalysatoren ein platinhaltiger NO-Oxidationskatalysator zur Bildung von NO₂ vorgeschaltet

2NO+O₂ ⇔ 2NO₂ (2)

so kann die SCR-Reaktion erheblich beschleunigt und die Tieftemperaturaktivität merklich angehoben werden.

NO+2NH₃+NO₂ ⇒ 2N₂+3H₂O (3)

Bei in Fahrzeugen betriebenen Brennkraftmaschinen gestaltet sich die Stickoxidreduzierung mit Hilfe des SCR-Verfahrens deshalb schwierig, weil dort wechselnde Betriebsbedingungen vorliegen, was die mengenmäßige Zumessung des Reduktionsmittels erschwert. Es soll zwar einerseits ein möglichst hoher Umsatz an Stickoxiden erreicht werden, andererseits ist aber darauf zu achteten, dass es nicht zur Emission von unverbrauchtem Ammoniak kommt. Um hier Abhilfe zu schaffen, wird häufig ein dem SCR-Katalysator nachgeordneter Ammoniak-Sperrkatalysator eingesetzt, der überschüssigen Ammoniak zu Stickstoff und Wasserdampf umsetzt. Weiter kann der Einsatz von V₂O₅ als Aktivmaterial für den SCR-Katalysator dann Probleme aufwerfen, wenn die Abgastemperatur am SCR-Katalysator über 650°C liegt, weil V₂O₅ dann sublimiert. Für diese Anwendungsfälle bietet sich die Verwendung von Fe-, Cu- oder Co-haltiger Zeolithe an.

Eine weitere Möglichkeit, die Stickoxide in sauerstoffreichem Abgas zu reduzieren, besteht darin, sogenannte NOx-Speicher-Katalysatoren einzusetzen. Dabei wird zyklisch zwischen stöchiometrischem und überstöchiometirschem Betrieb der Brennkraftmaschine gewechselt. In den überstöchiometrischen Phasen, werden die anfallenden Stickoxide in den Katalysatoren eingespeichert, beim anschließenden Wechsel in den stöchiometrischen oder unterstöchiometrischen werden die Stickoxide unter der Abwesenheit von Sauerstoff reduziert. Als Speicherkomponten werden Barium oder Kalzium eingesetzt, als Aktivkomponenten für die NOₓ-Reduktion kommen Elemente der Platinmetallgruppe in Frage. Eine Anordnung der beschriebenen Art ist der DE 69218777 T2 zu entnehmen.

Wird die Brennkraftmaschine stöchiometrisch betrieben, bietet sich selbstverständlich auch der Einsatz eines Drei-Wege-Katalysators an.

Zur Minimierung der Feinstoffpartikel werden sowohl im Kraftwerksbereich als auch bei Fahrzeugen entweder sogenannte Partikelabscheider oder Partikelfilter eingesetzt.
Eine für die Anwendung in Fahrzeugen typische Anordnung mit Partikelabscheider ist beispielsweise in der EP 1 072 765 A1 beschrieben. Derartige Anordnungen unterscheiden sich von solchen mit Partikelfiltern dadurch, dass der Durchmesser der Kanäle des Partikelabscheiders wesentlich größer als der Durchmesser der größten vorkommenden Partikel ist, während bei Partikelfiltern der Durchmesser der Filterkanäle im Bereich der Durchmesser der Partikel liegt. Infolge dieses Unterschiedes sind Partikelfilter verstopfungsgefährdet, was den Abgasgegendruck erhöht und die Motorleistung mindert. Eine Anordnung und ein Verfahren mit Partikelfilter ist der EP 0 341 832 A2 zu entnehmen.

Die beiden vorgenannten Anordnungen bzw. Verfahren zeichnen sich dadurch aus, dass der jeweils stromauf zum Partikelabscheider bzw. Partikelfilter angeordnete Oxidationskatalysator - zumeist ein Katalysator mit Platin als Aktivmaterial - das Stickstoffmonoxid im Abgas mit Hilfe des ebenfalls enthaltenen Restsauerstoffes zu Stickstoffdioxid oxidiert, das sich wiederum im Partikelabscheider, bzw. Partikelfilter mit den Kohlenstoffpartikeln zu CO, CO₂, N₂ und NO umsetzt. Auf diese Weise erfolgt eine kontinuierliche Entfernung der angelagerten Feinstoffpartikel, Regenerationszyklen, wie sie aufwändig bei anderen Anordnungen durchgeführt werden müssen, entfallen dadurch.

2NO₂ + C ⇒ 2NO + CO₂ (4)

2NO₂ + C ⇒ 2NO + CO (5)

2C + 2NO₂ ⇒ N₂ + 2CO₂ (6)

Gelingt keine vollständige Oxidation des im Partikelfilters eingelagerten Kohlenstoffs mit Hilfe von NO₂, so steigt der Kohlenstoffanteil und damit der Abgasgegendruck stetig an. Wird eine kritische Masse erreicht, kann es bei hohen Abgastemperaturen zur unkontrollierten Zündung des Kohlenstoffs kommen, der dann schlagartig mit Sauerstoff verbrennt.

C + O₂ ⇒ CO₂ (7)

Dies führt zu einem Temperaturanstieg auf bis zu 1000°C.

Um die zukünftig geltenden Abgasbestimmungen zu erfüllen, ist der gleichzeitige Einsatz sowohl von Anordnungen zur Reduzierung der Stickoxidemission, als auch von Anordnungen zur Reduzierung der Feinstoffpartikelemission erforderlich. Hierzu sind bereits verschiedene Anordnungen und Verfahren bekannt geworden.

In der DE 103 48 799 A1 ist eine Anordnung beschrieben, die aus einem Oxidationskatalysator einem stromab zu diesem im Abgasstrom angeordneten SCR-Katalysator und einem wiederum zu diesem stromab im Abgasstrom angeordneten Partikelfilter besteht. Die Zuführung des Reduktionsmittels für die im SCR-Katalysator ablaufende selektive katalytische Reaktion erfolgt unmittelbar vor dem SCR-Katalysator über eine in Abhängigkeit von Betriebsparametern der Brennkraftmaschine gesteuerte Harnstoffeinspritzeinrichtung. Nachteilig bei dieser Anordnung ist, dass das im Oxidationskatalysator erzeugte Stickstoffdioxid durch die selektive katalytische Reduktion im SCR-Katalysator im wesentlichen vollständig verbraucht ist, also für die Umsetzung der im nachgeordneten Partikelfilter angelagerten Feinstoffpartikel nicht zur Verfügung steht. Die Regeneration des Partikelfilters muss deshalb aufwändig durch zyklisches Aufheizen des Abgasstroms bewerkstelligt werden, indem der Abgasstrom mit unverbrannten Kohlenwasserstoffen angereichert wird. Dies geschieht entweder durch Anfetten des Verbrennungsgemisches oder Eindüsen von Kraftstoff vor den Partikelfilter. Eine derartige Anordnung zum Regenerieren des Partikelfilters ist einerseits aufwändig und damit teuer, andererseits erzeugt die zyklische Regeneration des am Ende der Anordnung liegenden Partikelfilters erneut Schadstoffe die nicht mehr aus dem Abgas entfernt werden können.

Eine weitere Kombination aus einem Partikelfilter und einer Anordnung zur selektiven katalytischen Reduktion ist aus der EP 1 054 722 A1 bekannt geworden. Die dort beschriebene Anordnung besteht aus einem im Abgasstrom angeordneten Oxidationskatalysator der den Anteil des Stickstoffdioxides im Abgas erhöht, einem stromab nachgeordneten Feinstofffilter, einem Reservoir für die Reduktionsflüssigkeit, sowie einer Einspritzeinrichtung für die Reduktionsflüssigkeit, die hinter dem Feinstofffilter angeordnet ist und einem hierzu im Abgasstrom stromab angeordneten SCR-Katalysator. Die vorstehend beschriebene Anordnung erlaubt zwar eine kontinuierliche Umsetzung der im Feinstofffilter angelagerten Feinstoffpartikel vom Ruß-Typ mit Hilfe des im Oxidationskatalysator erzeugten Stickstoffdioxids, hat aber einen anderen gravierenden Nachteil; Der Partikelfilter bedingt eine Abkühlung des Abgases, so dass, z. B. bei Verwendung der heute marktüblichen, mit AdBlue bezeichneten Reduktionsflüssigkeit, die Abgastemperatur insbesondere nach dem Start der Brennkraftmaschine, bzw. beim Betreiben der Brennkraftmaschine im unteren Leistungsbereich zu niedrig ist, um ohne den Anfall problematischer Nebenprodukte aus der 33%igen wässrigen Harnstofflösung Ammoniak zu erzeugen.

Im Zusammenhang mit der Zersetzung von Harnstoff ((NH₂)₂CO) in Ammoniak (NH₃) ist bekannt, dass dies unter optimalen Bedingungen (Temperaturen über 350° C) in zwei Stufen geschieht, nach

(NH₂)₂CO ⇒ NH₃ + HNCO (8)

erfolgt zunächst die Thermolyse, d. h. die thermische Zersetzung von Harnstoff. Anschließend erfolgt nach

HNCO + H₂O ⇒ NH₃ + CO₂ (9)

die Hydrolyse, also die katalytische Zersetzung von Isocyansäure (HNCO) in Ammoniak (NH₃) und Kohlendioxid (CO₂).

Da das Reduktionsmittel bei der Verwendung von AdBlue in einer in Wasser gelösten Form vorliegt, muss dieses Wasser vor und während der eigentlichen Thermo- und Hydrolyse verdampfen.

Sind die bei der vorstehenden Reaktion nach (7) und (8) vorliegenden Temperaturen unter 350°C bzw. wird nur langsam erhitzt, ist es aus der DE 40 38 054 A1 bekannt, dass hauptsächlich feste unschmelzbare Cyanursäure durch Trimerisierung der nach (7) gebildeten Isocyansäure gemäß 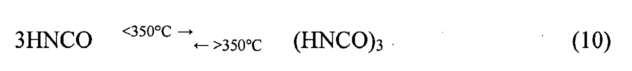 entsteht, die zur Verstopfung des nachfolgenden SCR-Katalysators führt. Abhilfe kann, wie in der erwähnten DE 40 38 054 ausgeführt, dadurch geschaffen werden, dass der mit dem Reduktionsmittel beladene Abgasstrom über einen Hydrolysekatalysator geführt wird. Die Abgastemperatur, ab der eine quantitative Hydrolyse möglich wird, lässt sich so auf 160°C drücken. Aufbau und Zusammensetzung eines entsprechenden Katalysators ist in der erwähnten Publikation ebenso beschrieben wie Aufbau und Funktion eines mit einem Hydrolysekatalysator ausgestatteten SCR-Katalysator-Systems.

Eine Kombination eines Partikelfilters und eines SCR-Katalysators in einem Bauteil ist in US 2006/0162323 A1 beschrieben. Hierbei wird der Partikelfilter mit einer SCR-aktiven Beschichtung versehen, wobei die Masse der aufgebrachten Beschichtung mindestens 50% der Masse der Partikelfilterwände beträgt. Dabei wird der komplette Filter mit aktivem Material versehen, wobei entweder eine Beschichtung der inneren Oberfläche der Filterwände, dem sogenannten "Bulk" und/oder der äußeren Oberfläche der Filterkanäle erfolgt. Der Nachteil dieses Verfahrens besteht darin, dass es, bei einem unkontrollierten Abbrennen des im Partikelfilter eingelagerten Kohlenstoffs gemäß der Gleichung 7, zu einer thermischen Schädigung der SCR-Katalysatoren kommen kann, da der abgeschiedene Kohlenstoff und der SCR-Katalysator in direktem Kontakt stehen.

In der DE 102 57 113 A1 ist die Beschichtung eines offenen Partikelabscheiders beschrieben, bei dem sich analog zu US 2006/0162323 A1 das Problem der thermischen Schädigung des SCR-Katalysators bei einer unkontrollierten Oxidation des abgeschiedenen Kohlenstoff ebenfalls ergibt, da auch hier der abgeschiedene Kohlenstoff und der SCR-Katalysator in direktem Kontakt stehen.

Die DE 10335785 A1 beschreibt einen Partikelfilter, bei dem die Austrittsoberfläche mit einer SCR-aktiven Beschichtung und die Eintrittsoberfläche mit einem Katalysator zur Bildung von NH3 in fetten Betriebsphasen versehen ist. Beim letztgenannten Katalysator kann es sich um einen platinmetallhaltigen Drei-Wege-Katalysator oder einen NOₓ-Speicher-Katalysator handeln. Der Nachteil dieser Anordnung besteht darin, dass nur in den fetten Betriebsphasen am SCR- Katalysator NH₃ vorliegt, während bei der, speziell für Dieselmotoren üblichen mageren Betriebsweise, kein NH₃ am SCR-Katalysator zu Verfügung steht und damit auch kein NOₓ-Umsatz generiert werden kann. In mageren Betriebsphasen kann das notwendige NH₃ nicht stromauf des Partikelfilters zugegeben werden, da es an den platinmetallhaltigen Katalysatoren der Eintrittsoberfläche des Filters oxidiert werde würde. D.h. das benötigte NH₃ muss durch zyklischen Wechsel zwischen fetten und mageren Betriebsphasen aus den Kohlenwasserstoffen des Kraftstoffs hergestellt werden. Dieses Verfahren führt in den fetten Betriebsphasen zu einer hohen thermischen Belastung des Motors und des Partikelfilters sowie und zu einem Anstieg des Kraftstoffverbrauchs.

Ein Partikelfilter, der auf der Eintrittsoberfläche einem Oxidationskatalysator und auf der Austrittsoberfläche mit einer SCR-aktiven Beschichtung versehen ist, wird in WO 2001/012320 A1 beschrieben. Auch hier kann stromauf des Filters kein NH₃ zugegeben werden, da es an den Oxidationskatalysatoren oxidiert werden und somit an den SCR-Katalysatoren nicht mehr zur Verfügung stehen würde. Zudem sind die Katalysatoren nur in Bereichen des Filters angebracht, die gasundurchlässig sind und die somit nicht zur Partikelabscheidung beitragen. Das hat zur Folge, dass der Partikelfilter relativ groß ausgelegt werden muss.

Dass Problem aller Verfahren, die die Beschichtung von Partikelfiltern beschreiben, ist, dass die geometrischen Oberflächen des Filters im Vergleich zu den üblicherweise eingesetzten Katalysatorsubstraten deutlich niedriger liegen. Der Grund hierfür ist, dass die Filter relativ große freie Querschnitte und damit freies Volumen auf der Rohgasseite benötigt, um Ruß und Motorölasche einzulagern. Werden keramische Filtersubstrate eingesetzt, wird dies durch eine geringe Zelligkeit von 50cpsi-200cpsi realisiert. Demgegenüber werden reine Katalysatoren üblicherweise mit Zelldichten von 400cpsi-900cpsi ausgeführt. Durch die Anhebung von 50cpsi auf 900cpsi ergibt sich eine Erhöhung der geometrischen Oberfläche von 1m²/l auf 4m²/l, wodurch erhebliche Umsatzsteigerung an den Katalysatoren möglich werden.

In jüngster Zeit sind Anordnungen bekannt geworden, bei denen bevorzugt die Austrittsseite des Partikelfilters mit katalytisch aktivem Material beschichtet wird. Ein solcher Filter ist in der WO 2007/070344 A1 beschrieben. Dadurch verringert sich die katalytisch aktive Oberfläche um die Hälfte im Vergleich zur beidseitigen Beschichtung der Ein- und Austrittsseite.

Aktuell werden auch wabenförmige Katalysatorträger eingesetzt, bei denen die Kanäle auf der Rohgasseite einen größeren freien Querschnitt als die auf der Austrittseite aufweisen. Eine solche Anordnung, wie sie in der WO 2005/030365 A1 beschrieben ist, verspricht zwar eine größeres Volumen für die Ruß- und Aschespeicherung auf der Rohgasseite, allerdings hat dies zur Folge, dass die geometrische Oberfläche auf der Austrittseite verringert wird und damit die Wirksamkeit einer katalytische Beschichtung auf dieser Oberfläche.

Ausgehend vom vorstehend beschriebenen Stand der Technik ist es Aufgabe der Erfindung unter Vermeidung der Nachteile bekannter Anordnungen ein Abgasnachbehandlungssystem zur Stickoxid- und Partikelreduzierung bei mit Luftüberschuss betriebenen Brennkraftmaschinen anzugeben, das sowohl die Partikelemission als auch die Stickoxidemission reduziert, und durch die Zusammenfassung von Komponenten und Funktionen in der Baugröße minimiert ist.

EP 2 154 343 A2 lehrt einen Partikelabscheider zur Abscheidung von Partikeln aus dem Abgasstrom einer Brennkraftmaschine wobei der Partikelabscheider unterschiedliche Wärmeübertragungszonen aufweist, mittels denen jeweils eine definierte Wärmemenge vom Abgasstrom auf den jeweils zugeordneten Partikelabscheiderabschnitt übertragbar ist. Durch Einbauelemente kann die geometrische Oberfläche der einzelnen Kanäle erhöht werden, wobei die geometrischen Oberflächen zudem mit einem Katalysatormaterial beladen bzw. beschichtet sein können.

Gelöst wird die Aufgabe durch ein Abgasnachbehandlungssystem gemäß dem Kennzeichen des Anspruches 1, vorteilhafte Weiterbildungen des Abgasnachbehandlungssystems sind in den abhängigen Ansprüchen gekennzeichnet.

Bei der Lösung der Aufgabe wurde davon ausgegangen, dass zum Erreichen der geforderten Abgasgrenzwerte die Stickoxidreduzierung durch einen SCR-Katalysator mit Hilfe von Ammoniak und/oder mit Hilfe eines NOₓ -Speicherkatalysators und/oder mit Hilfe eines Drei-Wege-Katalysators erfolgt und die Partikelreduktion mittels eines Partikelfilters bewerkstelligt wird. Das erfindungsgemäße Abgasnachbehandlungssystem sieht im Abgasstrom der Brennkraftmaschine einen Partikelfilter vor, bei dem es sich um einen Keramikfilter handelt. Zusätzlich ist die geometrische Oberfläche des Partikelfilters auf der Austrittseite, beispielsweise durch Einbauten oder spezielle Formgebung, vergrößert. Zur Reduktion der Stickoxide ist der Partikelfilter zumindest im Bereich der vergrößerten Oberfläche mit einem Katalysatormaterial zur Verminderung der NOx-Emissionen beladen. Dadurch gelingt es in vorteilhafter Weise, die katalytisch aktive Oberfläche zu vergrößern, ohne die Ruß- oder Aschespeicherkapazität des Partikelfilters auf der Anströmseite zu verkleinern.

Werden Katalysatoren eingesetzt, die durch die bei der exothermen Russoxidation auftretenden hohen Temperaturen beschädigt werden, so ist es weiter vorteilhaft, diese auf der Abströmseite des Partikelfilters und/oder auf den Einbauten anzubringen. Das Filtermaterial wirkt dann als Isolierung und schützt dadurch die Katalysatoren vor thermischer Schädigung. Diese Vorgehensweise bietet sich insbesondere bei SCR-Katalysatoren und hier speziell bei V₂O₅-haltigen Katalysatormaterialien an, da V₂O₅ bei hohen Temperaturen umkristallisiert oder gar sublimiert.

Ein weiterer Vorteil einer solchen Anordnung gegenüber dem Stand der Technik besteht in der minimierten Baugröße und damit dem minimierten Platzbedarf beim Einbau des Systems in ein Fahrzeug, insbesondere in einen Schalldämpfer eines Fahrzeugs.

Die Oberfläche auf der Austrittsseite kann vorteilhaft durch Einbauten vergrößert werden, wobei für diese Einbauten das gleiche Material wie das Filtermaterial verwendet werden kann, aber auch Materialien, die sich davon unterscheiden sind denkbar. Zudem können die Einbauten und der Partikelfilter zu einer festen baulichen Einheit zusammengefasst sein.

Bei wabenförmig aufgebauten Filtersubstraten gelingt die Oberflächenvergrößerung relativ einfach und damit vorteilhaft durch das Einbringen von Zwischenwänden auf der Austritts oder Reinseite. Dadurch vergrößert sich die Zelligkeit der Austrittseite im Vergleich zur Eintrittseite. Trotz der höheren Zelligkeit ist der Gegendruckanstieg einer solchen Konfiguration gering, da der Hauptgegendruck eines solchen Systems beim Durchströmen des Filtermaterials und darin oder darauf abgeschiedenen Ruß- oder Aschepartikel und nicht auf der Abströmseite entsteht. Derartige Partikelfilter lassen sich recht einfach durch Extrusion von Cordierit oder Siliziumcarbid oder Aluminiumtitanat herstellen, wobei nach der Extrusion abwechselnd Kanäle auf der Anström- und Abströmseite durch Pfropfen verschlossen werden, um die Gasströmung durch die Filterwände zu drücken.

Bei diesen keramischen Filtersubstraten gelingt die Herstellung des Filters und der Zwischenwände in einem Arbeitsschritt, da durch die Auswahl eines geeigneten Mundstücks mit abwechselnd hohen und niedrigen Zelligkeiten parallele Kanäle mit unterschiedlichen Kanalquerschnitten extrudiert werden können. Wird das Mundstück parallel aus unterschiedlichen Quellen, z. B. aus zwei Extrudern mit unterschiedlichen Materialien für die Bereiche niedriger Zelligkeit bzw. die Bereiche hoher Zelligkeit beschickt, lassen sich unterschiedliche Katalysatoreigenschaften im Filterkörper und an den Einbauten realisieren. Anschließend werden, wie bereits oben beschrieben, die Kanäle am Gasein- oder Gasaustritt verschlossen, um einen Gasdurchtritt durch das Filtersubstrat zu erreichen. Dabei ist darauf zu achten, dass sich die Öffnungen für die Kanäle mit hohen Zelligkeiten auf der Reinseite befinden und die Öffnungen für die Kanäle mit der niedrigen Zelligkeit auf der Rohgasseite. Darüber hinaus sind die Kanäle so anzuordnen, dass, über den Querschnitt des Partikelfilters gesehen, an Bereiche mit hoher Zelligkeit Kanäle mit niedriger Zelligkeit angrenzen.

Die prinzipielle Herstellung von keramischen Filtersubstraten ist in US7070728B2 beschrieben.

Ziel aller Maßnahmen ist es, dass die geometrische Oberfläche auf der Abströmseite des Partikelfilters inklusive eventuell vorhandener Einbauten mindestens 30% größer als auf der Anströmseite ist.

Um den Abgasgegendruck niedrig zu halten, wird die Menge des aufgebrachten Katalysators gering gehalten. So beträgt die aufgebrachte Masse typischerweise weniger als 50% der Masse der Filterwände. Diese kann allerdings erhöht werden, wenn die Porosität des Washcoats auf über 30% angehoben wird.

Um das Bauvolumen des Filters gering zu halten, wird der Katalysator vorwiegend in den gasdurchlässigen Bereichen des Filters und auf den Einbauten zur Erhöhung der geometrischen Oberfläche angebracht, so dass Partikelabscheidung und NOₓ-Reduktion direkt hintereinander und damit auf kleinstem Raum ablaufen können.

Günstig und damit vorteilhaft ist es, wenn die Beladung, speziell bei SCR-aktivem Katalysatormaterial, auf der Abströmseite des Partikelfilters in Strömungsrichtung des Abgases zunimmt. Erreicht werden kann die entsprechende Verteilung des SCR-aktiven Materials dadurch, dass der Partikelfilter in Schichten aufgebaut ist, wobei die abströmseitigen Schichten eine in Strömungsrichtung des Abgases ansteigende Beladung mit dem SCR-aktiven Material aufweisen. Es ist natürlich auch möglich, die Beladung mit dem SCR-aktiven Material durch Beschichten oder Imprägnieren der Abströmseite des Partikelfilters so vorzunehmen, dass der Grad der Beladung des Filtermaterials mit steigender Eindringtiefe der Beschichtungs- oder Imprägnierlösung abnimmt. Das SCR-aktive Katalysatormaterial, mit dem der Partikelfilter beladen ist, kann als Aktivkomponente Vanadium und/oder V₂O₅ und/oder und/oder WO₃/TiO₂ und/oder eisenhaltige Zeolithe und/oder kupferhaltige Zeolithe und/oder kobalthaltige Zeolithe enthalten.

Die selben vorstehend in Verbindung mit SCR-Katalysatoren beschriebenen Verfahren und Ausbildungen können selbstverständlich auch bei der Realisierung abströmseitiger NOx-Speicher- und/oder Drei-Wege-Katalysatoren angewendet werden, wobei das einen NOₓ-Speicherkatalysator ausbildende Material als Aktivkomponenten Platin und/ oder Palladium und/ oder Rhodium und/ oder Barium und/ oder Kalzium enthält, während das einen Drei-Wege-Katalystor ausbildende Material als Aktivkomponenten Platin und/ oder Palladium und/ oder Rhodium beinhaltet.

Die für die Bereitstellung des beim SCR-Verfahren notwendigen Ammoniaks wird durch die Zuführung eines ammoniakabspaltenden Reduktionsmittels oder von Ammoniak stromauf zum Partikelfilter realisiert.

Um die Abspaltung von Ammoniak aus dem Reduktionsmittel zu begünstigen, ist es beim SCR-Verfahren weiter von Vorteil, den Partikelfilter zusätzlich auf der Anströmseite mit einem entsprechend aktiven Katalysatormaterial zu beschichten oder zu imprägnieren. Als Aktivkomponente für ein solches Katalysatormaterial kommen TiO₂ und/oder TiO₂/SiO₂ und/oder TiO₂/SiO₂/Al₂O₃ und/oder Zeolithe in Frage.

Um zu vermeiden, dass bei der SCR-Reaktion eventuell unverbrauchtes NH₃ in die Umwelt gelangt, ist es von Vorteil, den Partikelfilter und/oder die Einbauten zusätzlich auf der Abströmseite, in Strömungsrichtung des Abgases gesehen am Ende der Beladung mit SCR-aktivem Katalysatormaterial, mit einem Katalysatormaterial zu beschichten oder zu imprägnieren, das im Abgas vorhandenen überschüssigen Ammoniak oxidiert. Das hierfür geeignete Katalysatormaterial zur Oxidation von überschüssigem Ammoniak können als Aktivkomponente Elemente der Platingruppe und/ oder deren Oxide und/ oder Zeolithe enthalten.

Weiter ist es vorteilhaft, stromauf des Partikelfilters und beim SCR-Verfahren stromauf zur Zuführung des Reduktionsmittels, einen Oxidationskatalysator anzuordnen, der zumindest einen Teil des im Abgasstrom enthaltenen Stickstoffmonoxids in Stickstoffdioxid überführt. Durch diese Maßnahme wird eine kontinuierliche Oxidation der am Partikelfilter angelagerten Rußpartikel nach den Gleichungen 4 bis 6 möglich, wobei das Temperaturniveau niedriger ist, als bei einer zyklischen Regeneration des Partikelfilters durch z.B. Anfetten des Verbrennungsgemisches oder durch Zugabe von Kohlenwasserstoffen in das heiße Abgas. Als Aktivmaterial für den Oxidationskatalysator zur Überführung von Stickstoffmonoxid in Stickstoffdioxid sind Platin und/ oder Platinoxid und/ oder Zeolithe geeignet.

In Verbindung mit dem vorstehend Gesagten wird der Vorteil des erfindungsgemäßen Abgasnachbehandlungssystems besonders deutlich. Durch die größere aktive Oberfläche auf der Reinseite kann der Schwerpunkt der NOₓ-Reduktion auf diese Seite und damit weg von der Rußoxidation durch NO₂ gelegt werden. Würde der Schwerpunkt dagegen auf der Rohgasseite liegen, wie es üblicherweise bei einem Standardpartikelfilter der Fall ist, wenn dieser komplett mit einem NOₓ-Speicherkatalysator oder einer SCR-aktiven Beschichtung versehen wird, würde dies gemäß Gleichung 3 zu einer starken Absenkung der NO₂-Konzentration auf der Anströmseite führen, wodurch die Oxidation des dort abgeschiedenen Rußes und damit die Filterregeneration mit Hilfe NO₂ erheblich verschlechtert würde.

Wie bereits oben beschrieben, kann der Schwerpunkt der NOₓ-Reduktion zusätzlich dadurch auf die Reinseite des Filters verschoben werden, dass nur die Einbauten und/oder dessen Reinseite mit Katalysatormaterial zur NOₓ-Verminderung versehen wird.

Eine besonders günstige und damit vorteilhafte Ausführungsform des Partikelfilter sieht vor, dass dieser sowohl auf seiner Anströmseite als auch auf seiner Abströmseite sacklochartige Kammern ausbildet, wobei die auf der Anströmseite gelegenen zur Anströmseite hin und die auf der Abströmseite gelegenen zur Abströmseite hin offen sind. Zur Erhöhung der geometrischen Oberfläche auf der Abström- oder Reingasseite sind die zu dieser Seite offenen sacklochartigen Kammern vorteilhaft mit Zwischenwänden versehen, die näherungsweise parallel zum Abgasstrom verlaufen.

Eine weitere Möglichkeit besteht darin, den Partikelfilter und die Einbauten mit unterschiedlichen Katalysatoren und/oder unterschiedlichen Katalysatorbeladungen zu versehen. So kann beispielsweise der Partikelfilter mit einem SCR-aktiven Material und die Einbauten mit einem Katalysator zur Oxidation von unverbrauchtem NH₃ beschichtet sein. Da die Temperaturen am Partikelfilter durch die Russoxidation höher liegen als an den auf der Abströmseite angebrachten Einbauten, kann es sinnvoll sein, den Partikelfilter mit einem thermisch stabileren Katalysator zu versehen, als die Einbauten.
In einer weiteren vorteilhaften Ausführungsform ist die größere geometrische Oberfläche des Partikelfilters (5, 9, 9') auf der Abströmseite (12) durch spezielle Formgebung des Filtermaterials und/oder durch Einbauten (23, 23') gebildet.

Vorteilhaft ist es ferner, wenn der Partikelfilter (5, 9, 9') und die Einbauten (23, 23') mit unterschiedlichen Katalysatormaterialien oder Materialien unterschiedlicher Katalysatorbeladung hergestellt sind.

Zumindest der Partikelfilter (9') kann in einem Schalldämpfergehäuse (17) integriert sein.

Die Materialien für den Partikelfilter (5,9,9') und die Einbauten (23, 23') können unterschiedlich sein.

Nachfolgend wird die Erfindung mit Hilfe der Zeichnungen anhand einiger Beispiele näher erläutert. Der Schwerpunkt liegt dabei auf der Darstellung von SCR-Systemen, da sie die verfahrenstechnisch anspruchsvollsten darstellen. Allerdings können die beschriebenen Prinzipien, wie oben ausgeführt, auf alle Katalysatoren zur NOₓ-Reduktion angewendet werden.

Es zeigen:
- Fig. 1: Eine schematische Darstellung eines Abgasnachbehandlungssystems
- Fig. 2: Eine Kombination aus Partikelfilter mit Zwischenwänden und SCR-Katalysator auf der Reinseite in schematischer Darstellung im Längsschnitt
- Fig:3: Eine Kombination aus Partikelfilter mit Zwischenwänden und SCR-Katalysator auf der Reinseite in schematischer Darstellung im Querschnitt (A-A)
- Fig. 4: Eine Kombination aus Partikelfilter mit Zwischenwänden, SCR-Katalysator und NH₃-Oxidationskatalysator in schematischer Darstellung
- Fig. 5: Eine Kombination aus Partikelfilter mit Zwischenwänden, SCR-Katalysator und Hydrolysekatalysator in schematischer Darstellung.
- Fig. 6: Eine Kombination aus Partikelfilter und SCR-Katalysator im Abgastrakt einer Brennkraftmaschine in schematischer Darstellung.

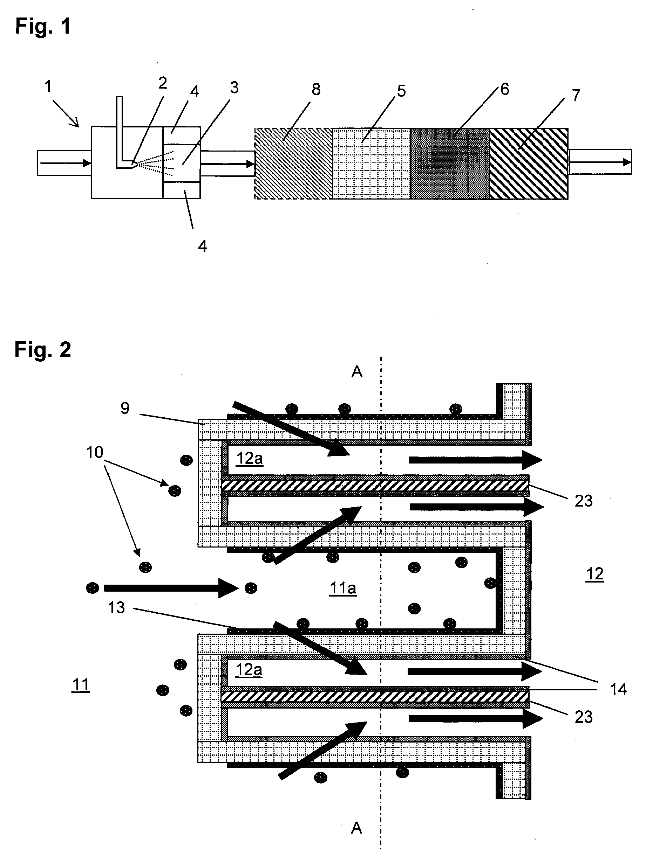

Ein Abgasnachbehandlungssystem zur selektiven katalytischen Reduktion und zur Reduzierung von Feststoffpartikeln im Abgas einer Brennkraftmaschine ist schematisch dargestellt in Fig. 1 gezeigt. Die von einer Brennkraftmaschine (nicht dargestellt) durch die Verbrennungsvorgänge erzeugten Abgase, in Fig. 1 durch die Pfeile symbolisiert, gelangen zunächst in einen Abgasaufbereitungstrakt 1, in welchem dem heißen Abgas ein Reduktionsmittel möglichst motornah beigegeben wird. Bei dem Reduktionsmittel handelt es sich, wie bei Kraftfahrzeugen mit SCR-Katalysator in der Praxis gebräuchlich, um eine wässrige Harnstofflösung, selbstverständlich ist aber auch die Zugabe von Harnstoff in fester Form denkbar, wie dies in der einschlägigen Fachliteratur bereits ausführlich beschrieben ist. Weiter ist es möglich als Reduktionsmittel Ammoniak zuzugeben, der an anderer Stelle, z.B. unter günstigeren thermischen Bedingungen, aus einem Ammoniak abspaltenden Stoff gewonnen wird. Die Zumessung erfolgt in Abhängigkeit von Betriebsparametern der Brennkraftmaschine, gesteuert über eine Motorsteuereinheit (nicht dargestellt), in der Weise, dass über eine Düse 2 die wässrige Harnstofflösung in einen Abgasteilstrom 3 eingesprüht wird. Parallel zum Abgasteilstrom 3 ist ein Oxidationskatalysator 4 angeordnet, dessen Aufgabe darin besteht, nach der vorstehend mit (2) bezeichneten Reaktion einen Teil des im Abgas enthaltenen St0ickstoffmonoxides mittels des im Abgas vorhandenen überschüssigen Sauerstoffes zu Stickstoffdioxid aufzuoxidieren. Verwendet wird das so erzeugte Stickstoffdioxid einerseits bei der Reduktion der Feststoffpartikel und andererseits bei der nachgeordneten SCR-Reaktion, wie dies nachfolgend noch näher beschrieben ist.

Stromab zum Abgasteilstrom 3 und dem parallel zu diesem angeordneten Oxidationskatalysator 4 ist ein Partikelfilter 5 angeordnet, der die im Abgas befindlichen Rußpatikel anlagert. Die so im Partikelfilter 5 festgehaltenen Rußpartikel werden durch das stromauf mit Hilfe des Oxidationskatalysators 4 erzeugte Stickstoffdioxid zu Kohlenmonoxid, Kohlendioxid, Stickstoff und Stickstoffmonoxid kontinuierlich umgesetzt, so dass aufwändige Regenerationszyklen für den Partikelfilter 5 entfallen.

Die eigentliche selektive katalytische Reduktion der Stickoxide erfolgt durch einen SCR-Katalysator 6, der in Figur 1 der Einfachheit halber zwar schematisch als separates Bauteil eingezeichnet ist, aber, wie weiter unten beschrieben, erfindungsgemäß als SCR-aktive Beschichtung des Partikelfilters 5 und/oder der Einbauten ausgeführt ist. In der angesprochenen Reduktionsreaktion soll ein möglichst großer Anteil der im Abgas vorhandenen Stickoxide (NOₓ), bei gleichzeitiger hoher Selektivität der Reduktion, in Stickstoff und Wasserdampf überführt werden, ohne dass überschüssiger Ammoniak (NH₃) im Abgasstrom verbleibt. Bei der angesprochenen SCR-Reduktionsreaktion ist das eventuell noch im Abgasstrom vorhandene restliche Stickstoffdioxid reaktionsfreudiger als das restliche im Abgas enthaltene NO, es ist demnach wünschenswert, den Oxidationskatalysator 4 so auszulegen, dass ein möglichst hoher Anteil an Stickstoffmonoxid in Stickstoffdioxid übergeführt wird, also nach Möglichkeit mehr als zur Umsetzung der Rußpartikel im Partikelabscheider nötig ist. Durch die stark exotherme Rußoxidation kann es zu einem deutlichen Temperaturanstieg kommen, so dass stromab des Partikelabscheiders durchaus Temperaturen oberhalb von 650°C, die zu einer Schädigung V₂O₅-haltiger SCR-Katatalysatoren führen, auftreten können. Aus diesem Grund kann der Einsatz von V₂O₅-freien SCR-Katalysatoren, die meist auf Eisen-, Kobalt- oder Kupferzeolithmaterial basieren, sinnvoll sein.

In Anbetracht der ständig wechselnden Betriebsbedingungen einer in einem Kraftfahrzeug betriebenen Brennkraftmaschine ist offensichtlich, dass die gewünschte möglichst hohe Umsetzungsrate an Stickoxiden nur dann sicher gelingen kann, wenn ein geringfügiger Ammoniaküberschuss in Kauf genommen wird. Um in Fällen ungenügender Umsetzung zu verhindern, dass giftiger Ammoniak mit dem teilgereinigten Abgas an die Außenluft abgegeben wird, ist dem SCR-Katalysator ein NH₃-Oxidationskatalysator 7 nachgeordnet, mit dem das überschüssige NH₃ in Stickstoff und Wasserdampf übergeführt wird. Der NH₃-Oxidationskatalysator 7, in Figur 1 ebenfalls schematisch durch ein separates Bauteil eingezeichnet, kann, wie weiter unten gezeigt, ebenfalls Teil der Kombination aus Partikelfilter 5 und SCR-Katalysator sein. Die Oxidationsreaktion zur Beseitigung des überschüssigen Ammoniaks sollte möglichst selektiv ablaufen, so dass zumindest Anteile von Iridium oder Iridiumoxid als Aktivmaterial für den NH₃-Oxidationskatalysator 7 verwendet werden sollten.

Wie in Figur 1 weiter mit gestrichelter Umfangslinie eingezeichnet, kann zur Verbesserung der Abspaltung des Ammoniaks aus dem Reduktionsmittel ein Hydrolysekatalysator 8 zum Einsatz kommen, wenn das Temperaturniveau an der Zuführstelle für das Reduktionsmittel nicht hoch genug ist. Dieser Hydrolysekatalysator 8, im Abgasstrom stromab zur Zuführstelle des Reduktionsmittels und stromauf zum Partikelfilter 5 angeordnet, ist in der Zeichnung zwar ebenfalls schematisch als separates Bauteil eingezeichnet, kann aber, wie weiter unten gezeigt, auch eine Beladung auf der Anströmseite des Partikelfilters 5 mit entsprechend aktivem Katalysatormaterial sein.

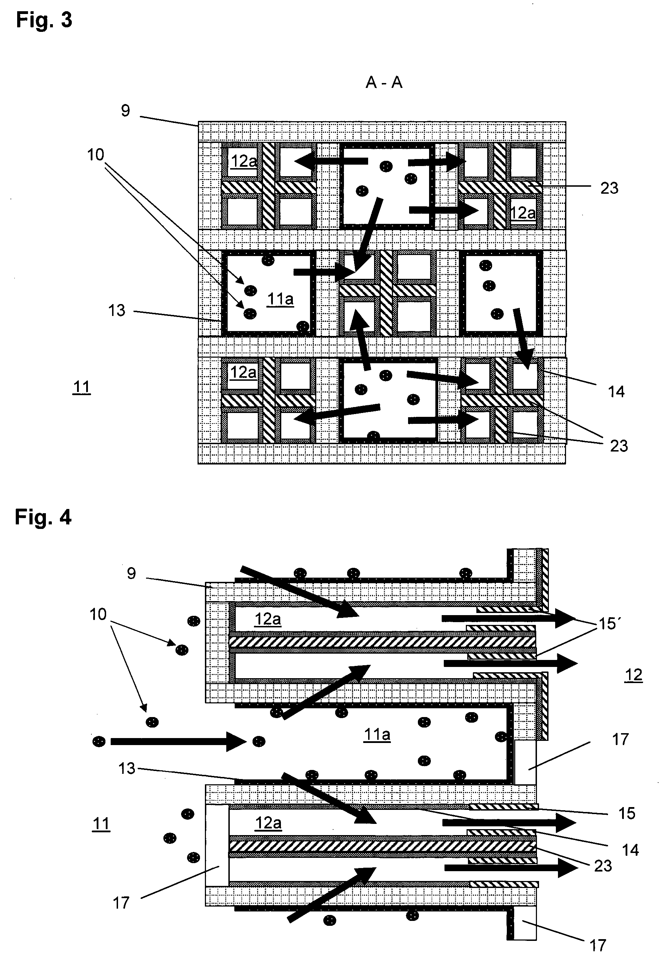

Die Ausführung eines Partikelfilters mit SCR-Aktivität wie er in der Anordnung nach Figur 1 zum Einsatz kommen kann, zeigt Fig. 2, ebenfalls schematisch, in Schnittdarstellung, wobei die Schnittebene parallel zur Strömungsrichtung des Abgases gewählt ist. Die Strömungsrichtung ist dabei, ebenso wie in den weiter unten beschriebenen Figuren 3 bis 5 durch Pfeile veranschaulicht.

Der Partikelfilter 9 weist sowohl auf seiner Anströmseite 11 als auch auf seiner Abströmseite 12 sacklochartige Kammern 11a, 12a auf, wobei die auf der Anströmseite 11 gelegenen zur Anströmseite 11 hin und die auf der Abströmseite 12 gelegenen zur Abströmseite 12 hin offen sind. Als Filtermaterial für den Partikelfilter 9 können Cordierit oder Siliziumcarbid oder Aluminiumtitanat eingesetzt werden.

Wie in der Darstellung erkennbar, trifft der mit Rußpartikeln 10 und mit Ammoniak (NH₃) (nicht dargestellt) beladene Abgasstrom auf die Anströmseite 11 des Partikelfilters 9 und lagert die Rußpartikel 10 insbesondere in den sacklochartigen Kammern 11a als sogenannten Filterkuchen 13 an, bevor das so von Rußpartikeln 10 gereinigte Abgas durch das Filtermaterial auf die sacklochartigen Kammern 12a der Abströmseite 12 zuströmt. Vor dem Erreichen der Kammern 12a durchströmt das mit NH₃ beladene Abgas eine auf der Abströmseite 12 gelegene, mit SCR-aktivem Katalysatormaterial 14 beladene Schicht des Partikelfilters 9 und bleibt mit dieser in Kontakt, bis es aus den sacklochartigen oder taschenförmigen Kammern 12a ausströmt. Zur Vergrößerung der geometrischen Oberfläche sind auf in den abströmseitigen Kammern 12a Trennwände 23 angebracht, die ebenfalls katalytisch beschichtet sind. Auf dem Weg durch die mit SCR-aktivem Katalysatormaterial 14 beladene Schicht, sowie in den Kammern 12a, findet die selektive katalytische Reduktion nach den Reaktionen (1) und (2) statt, in der die Stickoxide in Stickstoff und Wasserdampf übergeführt werden
Das von Rußpartikeln und Stickoxiden gereinigte Abgas verlässt auf der Abströmseite 12 die Filteranordnung.

Zur Regenerierung des Partikelfilters 9 muss der Filterkuchen 13 entweder kontinuierlich oder zyklisch entfernt werden. Die kontinuierliche Entfernung des Filterkuchens 13 wird, wie bereits zu Figur 1 beschrieben, dadurch bewerkstelligt, das dem Partikelfilter 9 ein in Figur 2 nicht dargestellter Oxidationskatalysator vorgeschaltet ist, der nach Reaktion (2) zumindest einen Teil des im Abgas vorhandenen Stickstoffmonoxids in Stickstoffdioxid überführt. Der Oxidationskatalysator muss stromauf zu der Stelle liegen, an der das Reduktionsmittel dem Abgasstrom beigegeben wird, da sonst das Reduktionsmittel oxidiert und damit für die SCR-Reaktion unbrauchbar würde.

Das im Abgas angereicherte Stickstoffdioxid bewirkt im Kontakt mit dem Filterkuchen 13 nach den Reaktionen (4), (5) und (6) eine Umsetzung der Rußpartikel 10 zu CO, CO₂, N₂ und NO, wobei diese Reaktionen kontinuierlich ablaufen, so dass der Filterkuchen auf einer im wesentlichen konstanten Dicke und der durch diesen verursachte Abgasgegendruck auf einem im wesentlichen konstanten Niveau gehalten werden kann.

Alternativ zu der kontinuierlichen Regenerierung des Partikelfilters 13 besteht auch die Möglichkeit, diesen zyklisch zu regenerieren. Dazu wird in bekannter Weise der Gehalt an Kohlenwasserstoffen im Abgas erhöht, sodass diese im Kontakt mit dem Filterkuchen die Rußpartikel 10 in einer stark exothermen Reaktion oxidieren.

Die in beiden Fällen der Regeneration des Partikelfilters 9 gegebene lokale Temperaturerhöhung an der Anströmseite 11 des Partikelfilters 9 wird durch das Filtermaterial relativ gut zur an der Abströmseite 12 des Partikelfilters 9 angeordneten Beladung mit dem SCR-aktiven Katalysatormaterial 14 abgeschirmt, so dass eine Schädigung des SCR-aktiven Katalysatormaterials nicht zu befürchten ist. Um bei kritischen Temperaturverhältnissen eine Schädigung des SCR-aktiven Katalysatormaterials sicher auszuschließen, können an Stelle des temperaturempfindlicheren Vanadiums bzw. V₂O₅ auch WO₃/TiO₂ oder eisenhaltige, kupferhaltige oder kobalthaltige Zeolithe als Katalysatormaterial eingesetzt werden.

Aus Gründen der thermischen Stabilität kann es weiter vorteilhaft sein, wenn die Beladung des Partikelfilters mit katalytisch aktivem Material in Strömungsrichtung des Abgases ansteigt. Dies lässt sich entweder dadurch erreichen, dass der Partikelfilter in Schichten aufgebaut ist, wobei die Beladung der Schichten mit katalytisch aktivem Material in Strömungsrichtung des Abgases zunimmt, oder dadurch, dass die Beladung mit dem katalytisch aktiven Material durch Beschichten oder Imprägnieren der Abströmseite des Partikelfilters so vorgenommen wird, dass der Grad der Beladung des Filtermaterials mit steigender Eindringtiefe der Beschichtungs- oder Imprägnierlösung abnimmt.

In Fig3. ist ein Querschnitt durch das in Fig2. dargestellte Filtersubstrat am Schnitt A-A dargestellt. Die Bezeichnungen sind mit denen der Fig 2 identisch. Es wird deutlich, dass durch das hier dargestellte Einbringen von zwei senkrecht aufeinanderstehenden Zwischenwänden 23 in die Austrittskammern, die katalytisch beschichtbare Oberfläche auf der Austrittseite nahezu vervierfacht werden kann.

Um bei instationärem Betrieb der Brennkraftmaschine, wie es bei in Fahrzeugen betriebenen Brennkraftmaschinen der Normalfall ist, einen möglichst hohen Umsatz an Stickoxiden beim SCR-Verfahren zu erhalten, ist es notwendig, das Abgasnachbehandlungssystem mit leichtem Ammoniaküberschuss zu betreiben. Da das giftige Ammoniak-Gas nicht an die Außenluft abgegeben werden darf, besteht die Notwendigkeit, am Ende der Abgasnachbehandlungsanordnung einen Ammoniak-Oxidationskatalysator vorzusehen. Eine solche Anordnung ist in Fig. 4 schematisch dargestellt. Auch hier ist eine Schnittdarstellung gewählt, deren Schnittebene parallel zur Strömungsrichtung des Abgases verläuft. Nachdem die Darstellung in Figur 4 in weiten Teilen gleich ist zu der in Figur 2, wurden für gleiche Teile gleiche Bezugszeichen gewählt. Diese gleichen Teile werden, um Wiederholungen zu vermeiden, nicht nochmals beschrieben, es wird statt dessen auf die Beschreibung zur Figur 2 verwiesen.

Zur Oxidation des überschüssigen Ammoniaks im Abgas ist vorgesehen, auf der Abströmseite 12 des Partikelfilters 9, am Ausgang der sacklochartigen Kammern 12a, entweder eine Imprägnierung des SCR-aktiven Katalysatormaterials 14 mit einem Material 15 zur Oxidation von Ammoniak vorzunehmen (in der Figur 3 unten) oder das SCR-aktive Katalysatormaterial 14 mit einem Material 15'zur Oxidation von Ammoniak zu beschichten (in Figur 3 oben). In beiden Fällen wird der überschüssige Ammoniak zuverlässig in Stickstoff und Wasserdampf übergeführt.

Herstellungsmöglichkeiten für den Grundkörper des Partikelfilters 3 sollen in Verbindung mit Figur 3 ebenfalls beispielhaft und prinzipiell aufgezeigt werden. Um eine sacklochartige Struktur zu erzeugen, kann entweder eine Vielzahl röhrenförmige Gebilde zu einer dichten Packung zusammengefasst werden, wobei jeweils benachbarte Röhren wechselseitig entweder auf der Anströmseite oder auf der Abströmseite verschlossen werden. Das Verschließen kann mit dem gleichen Material erfolgen, das auch für den Partikelfilter 9 verwendet wird, das Material kann aber auch unterschiedlich, z.B. neutral sein. Eine weitere Möglichkeit zur Erzeugung der sacklochartigen Kammern 11a, 12a besteht darin, in einem wabenförmigen Filterkörper Kanäle vorzusehen, von denen jeweils benachbarte wechselseitig an den jeweils gegenüberliegenden Enden verschlossen sind. Derartige wabenförmige Filterkörper können beispielsweise durch Extrudieren von Cordierit oder Siliziumcarbid oder Aluminiumtitanat hergestellt, werden wie dies bereits oben ausgeführt wurde.

Die Beladung mit SCR-aktivem Katalysatormaterial kann bei den vorstehend angesprochenen Strukturen dadurch erfolgen, dass zunächst nur jede zweite Öffnung auf der Abströmseite 12 verschlossen wird und sodann der Filterkörper in eine Beschichtungs- oder Imprägnierlösung getaucht wird, wodurch die Beschichtungs- oder Imprägnierlösung in den zur Abströmseite hin offenen Kanälen aufsteigt. Die überschüssige Beschichtungs- oder Imprägnierlösung wird nach erfolgter Beschichtung oder Imprägnierung wieder ausgeblasen und die beschichteten oder imprägnierten Kanäle werden sodann zur Anströmseite 11 hin verschlossen.

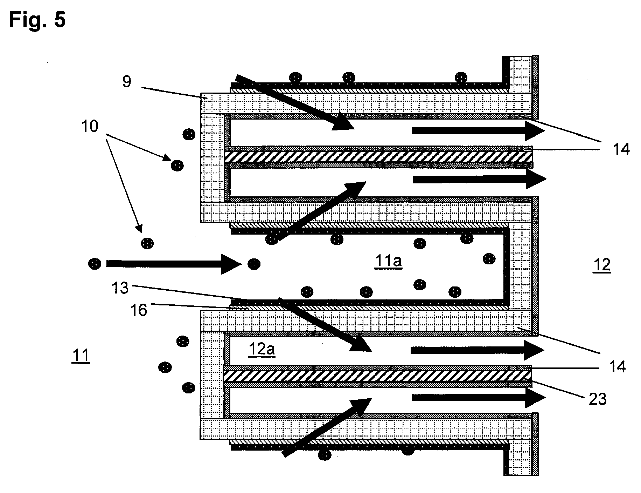

Wie bereits in Verbindung mit Figur 1 ausgeführt, kann es zur Verbesserung der Abspaltung von Ammoniak aus dem Reduktionsmittel - z.B. wässrige Harnstofflösung (AdBlue) - notwendig sein, einen die Abspaltung begünstigenden Katalysator einzusetzen, um die Bildung von Cyanursäure nach den Reaktionen (8) und (10) zu verhindern. Die Bildung von Cyanursäure ist deshalb problematisch, weil es dadurch zu einer Verblockung des Partikelfilters und damit nicht nur zum Ausfall des Abgasnachbehandlungssystems, sondern der Brennkraftmaschine kommen kann. Erzeugt wird der Katalysator zur Verbesserung der Abspaltung von Ammoniak aus dem Reduktionsmittel dadurch, dass, wie in Fig. 5 in Schnittdarstellung schematisch gezeigt, die Anströmseite des Partikelfilters 9 mit einem die Abspaltung begünstigenden Katalysatormaterial 16 beladen ist. Dafür in Frage kommende Materialien sind TiO₂ oder TiO₂/SiO₂ oder TiO₂/SiO₂/Al₂O₃ sowie Zeolithe. Die Erzeugung einer entsprechenden Beladung erfolgt analog zu den oben beschriebenen Vorgehensweisen. Die übrige Darstellung in Figur 4 entspricht der in Figur 2 gezeigten, sodass auf eine nochmalige Beschreibung verzichtet werden kann, es wird auf die entsprechenden Beschreibungsteile zu Figur 2 verwiesen.

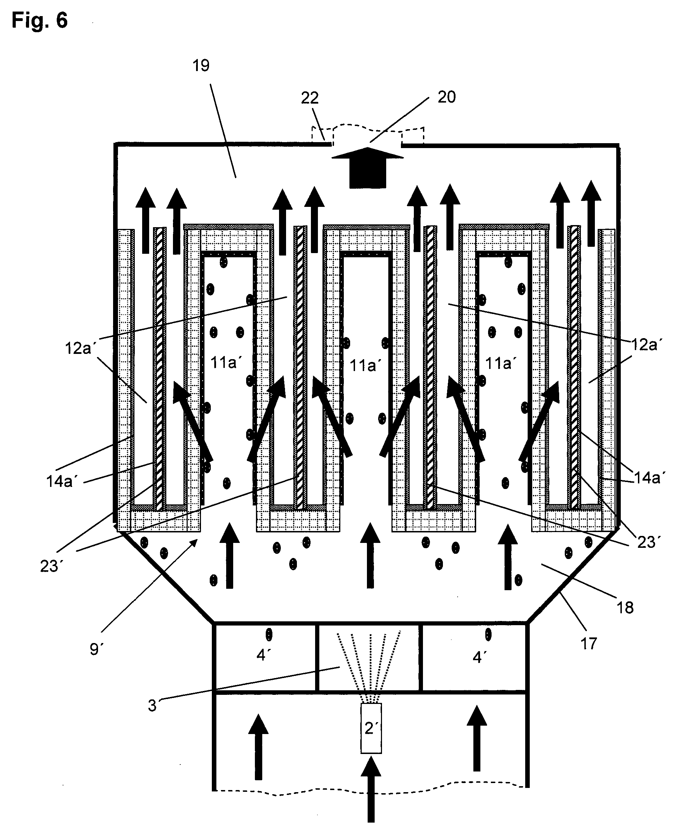

Weiter ist in Fig. 6 die Anordnung des Abgasnachbehandlungssystems in einem in den Abgastrakt einer Brennkraftmaschine integrierten Gehäuse, z.B. einem Schalldämpfer, schematisch angedeutet.

Ein wabenförmig ausgebildeter Partikelfilter 9', der anströmseitige Kammern 11a' und abströmseitige Kammern 12a' ausbildet, ist auf seiner den abströmseitigen Kammern 12a' zugewandten Seite, analog den Beispiel nach Figur 2, mit einem SCR-aktiven Katalysatormaterial 14' beladen. Zusätzlich sind die abströmseitig angeordneten Einbauten 23' katalytisch beschichtet. Durch die Lagerung des wabenförmig ausgebildeter Partikelfilter 9' in einem Gehäuse 17 wird dieses in einen abströmseitiger Raum 19 und einen anströmseitigen Raum 18 unterteilt, der wobei der abströmseitige Raum 19 an seinem offenen Ende 20 an eine Abströmöffnung 22 des Gehäuses 17 anschließt. Im anströmseitigen Raum 18 ist ein Oxidationskatalysator 4' angeordnet, der Teile des im Abgasstrom enthaltenen Stickstoffmonoxids in Stickstoffdioxid überführt. Im Zentrum des Oxidationskatalysators 4' befindet sich eine Öffnung die einen Abgasteilstrom 3' ausbildet, in den mittels einer Düse 2' ein Reduktionsmittel zugeführt wird.

Wie in der Darstellung durch Pfeile die die Strömungsrichtung des Abgases angeben angedeutet, durchströmt das von der Brennkraftmaschine (nicht dargestellt) kommende Abgas zunächst den Oxidationskatalysator 4' und nimmt im parallel geführten Abgasteilstrom 3' das Reduktionsmittel, z. B. Ammoniak, auf. Sodann strömt das mit NH₃ beladene und mit NO₂ angereicherte Abgas vom anströmseitigen Raum 18 über die anströmseitigen Kammern 11a' durch den Partikelfilter 9'und seine mit SCR-aktivem Katalysatormaterial 14' beladene Abströmseite zu den abströmseitigen Kammern 12a' und verlässt über den sich anschließenden abströmseitige Raum 19 und die Abströmöffnung 22 die Anordnung. Auf seinem Weg durch den Partikelfilter 9' werden an dessen anströmseitiger Oberfläche die im Abgas enthaltenen Rußpartikel angelagert und durch das im Abgas angereicherte NO₂ kontinuierlich oxidiert. Die im Abgas mitgeführten Stickoxide werden zusammen mit dem ebenfalls enthaltenen Ammoniak beim Durchströmen der mit dem SCR-aktiven Katalysatormaterial 14' beladenen Teile des Partikelfilters 9' und an den katalytisch beschichteten Einbauten 23' in Stickstoff und Wasserdampf übergeführt. Hinsichtlich der vorstehend angesprochenen chemischen Reaktionen wird auf die bereits oben dargelegten formelmäßigen Zusammenhänge verwiesen.

Selbstverständlich kann der Partikelfilter in beliebig anderer Anordnung als der in Figur 6 gezeigten in einen Schalldämpfer angeordnet sein, gleichfalls kann es sich um einen oder mehrere solcher Partikelfilter handeln. Lage und Anordnung des bzw. der Partikelfilter in einem Schalldämpfer richtet sich nach den jeweiligen Platzverhältnissen, die letztlich auch die Anströmrichtung des Abgases zum Schalldämpfer hin sowie die Abströmrichtung vom Schalldämpfer weg festlegen.

Die vorstehend beschriebenen Ausführungen lassen sich selbstverständlich mit dem Fachmann zugänglichem Fachwissen auf vielfältige Weise ausgestalten, ohne den grundlegenden erfinderischen Gedanken zu verlassen, den beschriebenen Ausführungsformen kommt somit nur Beispielcharakter zu.

## Patentansprüche

1. Abgasnachbehandlungssystem zur Stickoxid- und Partikelreduzierung bei Brennkraftmaschinen, wobei die Stickoxidreduzierung mittels eines Katalysators und die Partikelreduktion mittels eines Partikelfilters erfolgt und wobei
- im Abgasstrom der Brennkraftmaschine ein vom Abgas durchströmter Partikelfilter (5, 9, 9') angeordnet ist,
- der Partikelfilter (5, 9, 9') ein Keramikfilter ist,
- der Partikelfilter (5, 9, 9') auf seiner Abströmseite (12) eine größere geometrischen Oberfläche als auf der Anströmseite (11) aufweist,
- der Partikelfilter (5, 9, 9') zumindest im Bereich der größeren geometrischen Oberfläche mit einem Katalysatormaterial zur Reduktion von Stickoxiden beladen ist,
- die größere geometrische Oberfläche des Partikelfilters (5, 9, 9') auf der Abströmseite (12) durch spezielle Formgebung des Filtermaterials und/oder durch Einbauten (23, 23') gebildet,
- der Partikelfilter (5, 9, 9') durch Extrusion hergestellt ist und parallele Kanäle aufweist,
**dadurch gekennzeichnet, dass**
- über den Querschnitt des Partikelfilters (5, 9, 9') die Zelldichten variieren,
- Bereiche hoher Zelldichte an Bereiche geringer Zelldichte angrenzen,
- die Bereiche hoher Zelldichte zur Anströmseite (11) hin verschlossen und zur Abströmseite (12) offen sind,
- die Bereiche geringer Zelldichte zur Abströmseite (12) hin verschlossen und zur Anströmseite (11) hin offen sind,
- das den Partikelfilter (5, 9, 9') anströmende Abgas über die anströmseitigen Öffnungen in die Bereiche geringer Zelldichte gelangt, durch die Kanalwände in
- die Bereiche hoher Zelldichte überströmt und von diesen aus über die abströmseitigen Öffnungen aus dem Partikelfilter (5, 9, 9') ausströmt,
- zumindest die Abströmseite des Partikelfilters mit einem Katalysatormaterial zur NOₓ-Verminderung beladen ist.

2. Abgasnachbehandlungssystem nach Anspruch 1, **dadurch gekennzeichnet, dass** die größere geometrische Oberfläche auf der Abströmseite (12) des Partikelfilters (5, 9, 9') einschließlich gegebenenfalls vorhandener Einbauten (23, 23') mindestens 30% größer ist, als die geometrische Oberfläche auf der Anströmseite (11).

3. Abgasnachbehandlungssystem nach einem der vorhergehenden Ansprüche, **dadurch gekennzeichnet, dass** der Partikelfilter (5, 9, 9') und/oder gegebenenfalls vorhandene Einbauten (23, 23') zur Vergrößerung der Oberfläche aus extrudiertem Cordierit und/oder Siliziumcarbid und/ oder Aluminiumtitanat bestehen und die Abströmseite (12) des Partikelfilters und/ oder die gegebenenfalls vorhandenen Einbauten (23, 23') mit einem Katalysatormaterial zur NOₓ-Verminderung beladen sind, und wobei der Partikelfilter (5, 9, 9') zur Vergrößerung der abströmseitigen Oberfläche Einbauten (23, 23') aufweist, wobei Partikelfilter (5, 9, 9') und Einbauten (23, 23') eine feste Einheit bilden.

4. Abgasnachbehandlungssystem nach einem der vorhergehenden Ansprüche, **dadurch gekennzeichnet, dass** für die NOₓ-Reduktion Materialien eingesetzt werden die einen SCR-Katalysator oder einen NOₓ-Speicherkatalysator oder einen Drei-Wege-Katalysatoren ausbilden.

5. Abgasnachbehandlungssystem nach einem der vorhergehenden Ansprüche, **dadurch gekennzeichnet, dass** die Beladung mit dem Katalysatormaterial auf der Abströmseite (12) des Partikelfilters (5, 9, 9') in Strömungsrichtung das Abgases zunimmt, und wobei der Partikelfilter (5, 9, 9') und die Einbauten (23, 23') mit unterschiedlichen Katalysatormaterialien oder Materialien unterschiedlicher Katalysatorbeladung hergestellt sind.

6. Abgasnachbehandlungssystem nach einem der vorhergehenden Ansprüche, **dadurch gekennzeichnet, dass** das einen SCR-Katalysator (6, 14) ausbildende SCR-aktive Katalysatormaterial (6, 14, 14') als Aktivkomponente Vanadium und/ oder V₂O₅ und/ oder WO₃/TiO₂ und/ oder eisenhaltige Zeolithe und/ oder kupferhaltige Zeolithe und/ oder kobalthaltige Zeolithe enthält.

7. Abgasnachbehandlungssystem nach einem der vorhergehenden Ansprüche, **dadurch gekennzeichnet, dass** das einen NOₓ-Speicherkatalysator ausbildende Material als Aktivkomponenten Platin und/ oder Palladium und/ oder Rhodium und/ oder Barium und/ oder Kalzium enthält.

8. Abgasnachbehandlungssystem nach Anspruch 1, **dadurch gekennzeichnet, dass** der Partikelfilter (5, 9, 9') zusätzlich auf der Anströmseite (11) mit einem Katalysatormaterial beladen ist, das die Abspaltung von Ammoniak aus einem stromauf zum Partikelfilter (5, 9, 9') in den Abgasstrom beigegebenen, Ammoniak abspaltenden Reduktionsmittels begünstigt und die vergrößerte geometrische Oberfläche mit einem SCR-aktiven Katalysatormaterial (6, 14, 14') beladen ist, das dort einen SCR-Katalysator ausbildet.

9. Abgasnachbehandlungssystem nach Anspruch 8, **dadurch gekennzeichnet, dass** das Katalysatormaterial, das die Abspaltung des Ammoniaks aus dem Reduktionsmittel begünstigt, als Aktivkomponente TiO₂ und/oder TiO₂/SiO₂ und/oder TiO₂/SiO₂/Al₂O₃ und/oder Zeolithe enthält.

10. Abgasnachbehandlungssystem nach einem der vorangegangenen Ansprüche, **dadurch gekennzeichnet, dass** stromauf des Partikelfilters ein Oxidationskatalysator (4, 4') angeordnet ist, der zumindest einen Teil des im Abgasstrom enthaltenen Stickstoffmonoxids in Stickstoffdioxid überführt, wobei vorzugsweise der Oxidationskatalysator (4, 4') zur Überführung von Stickstoffmonoxid in Stickstoffdioxid als Aktivmaterial Platin und/ oder Platinoxid und/ oder Zeolithe enthält.

11. Abgasnachbehandlungssystem nach Ansprüchen 1, 4 oder 6, **dadurch gekennzeichnet, dass** der Partikelfilter (5, 9, 9') zusätzlich auf der Abströmseite (12), in Strömungsrichtung des Abgases gesehen am Ende des mit SCR-aktivem Katalysatormaterial (6, 14, 14') beladenen Bereiches, mit einem Material (15, 15') beschichtet oder imprägniert ist, das im Abgas vorhandenen überschüssigen Ammoniak oxidiert.

12. Abgasnachbehandlungssystem nach Anspruch 11, **dadurch gekennzeichnet, dass** das Material (15, 15') zur Oxidation von überschüssigem Ammoniak Elemente der Platingruppe und/ oder deren Oxide und/ oder Zeolithe enthält.

13. Abgasnachbehandlungssystem nach einem der vorhergehenden Ansprüche, **dadurch gekennzeichnet, dass** der Partikelfilter (5, 9, 9') sowohl auf seiner Anströmseite (11) als auch auf seiner Abströmseite (12) sacklochartige Kammern (11a, 11a', 12a, 12a') ausbildet, wobei die auf der Anströmseite (11) gelegenen zur Anströmseite hin offen und die auf der Abströmseite (12) gelegenen zur Abströmseite hin offen sind.

14. Abgasnachbehandlungssystem nach Anspruch 13, **dadurch gekennzeichnet, dass** die abströmseitigen sacklochartigen Kammern (12, 12a) des Partikelfilters (5, 9, 9') als Einbauten (23, 23') Zwischenwände aufweisen, wobei die Zwischenwände im wesentlichen parallel zur Strömungsrichtung des Abgases verlaufen, derart, dass die abströmseitigen sacklochartigen Kammern (12a, 12a') in mehrere Teilkammern unterteilt sind.

## Claims

1. An exhaust-gas aftertreatment system for nitrogen oxide and particle reduction in internal combustion engines, wherein the nitrogen oxide reduction is effected by means of a catalytic converter and the particle reduction is effected by means of a particle filter, and wherein
- a particle filter (5, 9, 9'), through which the exhaust gas flows, is arranged in the exhaust-gas stream of the internal combustion engine,
- the particle filter (5, 9, 9') is a ceramic filter,
- the particle filter (5, 9, 9') has a greater geometrical surface area on its outflow side (12) than on the inflow side (11),
- the particle filter (5, 9, 9') is laden with a catalyst material for reducing nitrogen oxides at least in the region of the greater geometrical surface area,
- the greater geometrical surface area of the particle filter (5, 9, 9') on the outflow side (12) is formed by specific shaping of the filter material and/or by fixtures (23, 23'),
- the particle filter (5, 9, 9') is produced by extrusion and has parallel ducts,
**characterized in that**
- the cell densities vary over the cross section of the particle filter (5, 9, 9'),
- regions of high cell density adjoin regions of low cell density,
- the regions of high cell density are closed towards the inflow side (11) and are open towards the outflow side (12),
- the regions of low cell density are closed towards the outflow side (12) and are open towards the inflow side (11),
- the exhaust gas flowing onto the particle filter (5, 9, 9') passes via the inflow-side openings into the regions of low cell density, flows over through the duct walls into the regions of high cell density and from there flows via the outflow-side openings out of the particle filter (5, 9, 9'),
- at least the outflow side of the particle filter is laden with a catalyst material for NOₓ reduction.

2. The exhaust-gas aftertreatment system according to Claim 1, **characterized in that** the greater geometrical surface area on the outflow side (12) of the particle filter (5, 9, 9'), including any fixtures (23, 23') present, is at least 30% greater than the geometrical surface area on the inflow side (11).

3. The exhaust-gas aftertreatment system according to either of the preceding claims, **characterized in that** the particle filter (5, 9, 9') and/or any fixtures (23, 23') present for increasing the surface area consist of extruded cordierite and/or silicon carbide and/or aluminium titanate, and the outflow side (12) of the particle filter and/or the fixtures (23, 23') optionally present are laden with a catalyst material for NOₓ reduction, and wherein the particle filter (5, 9, 9') has fixtures (23, 23') for increasing the outflow-side surface area, with the particle filter (5, 9, 9') and the fixtures (23, 23') forming a solid unit.

4. The exhaust-gas aftertreatment system according to one of the preceding claims, **characterized in that** materials which form an SCR catalytic converter or an NOₓ storage catalytic converter or a three-way catalytic converter are used for the NOₓ reduction.

5. The exhaust-gas aftertreatment system according to one of the preceding claims, **characterized in that** the loading with the catalyst material on the outflow side (12) of the particle filter (5, 9, 9') increases in the direction of flow of the exhaust gas, and wherein the particle filter (5, 9, 9') and the fixtures (23, 23') are produced using different catalyst materials or materials with different catalyst loading.

6. The exhaust-gas aftertreatment system according to one of the preceding claims, **characterized in that** the SCR-active catalyst material (6, 14, 14') which forms an SCR catalytic converter (6, 14) contains, as active component, vanadium and/or V₂O₅ and/or WO₃/TiO₂ and/or iron-containing zeolites and/or copper-containing zeolites and/or cobalt-containing zeolites.

7. The exhaust-gas aftertreatment system according to one of the preceding claims, **characterized in that** the material which forms an NOₓ storage catalytic converter contains, as active components, platinum and/or palladium and/or rhodium and/or barium and/or calcium.

8. The exhaust-gas aftertreatment system according to Claim 1, **characterized in that** the particle filter (5, 9, 9') is additionally laden on the inflow side (11) with a catalyst material which promotes the release of ammonia from an ammonia-releasing reducing agent added into the exhaust-gas stream upstream of the particle filter (5, 9, 9'), and the enlarged geometrical surface area is laden with an SCR-active catalyst material (6, 14, 14') which forms an SCR catalytic converter there.

9. The exhaust-gas aftertreatment system according to Claim 8, **characterized in that** the catalyst material which promotes the release of the ammonia from the reducing agent contains, as active component, TiO₂ and/or TiO₂/SiO₂ and/or TiO₂/SiO₂/Al₂O₃ and/or zeolites.

10. The exhaust-gas aftertreatment system according to one of the preceding claims, **characterized in that** an oxidation catalytic converter (4, 4') is arranged upstream of the particle filter and converts at least part of the nitrogen monoxide present in the exhaust-gas stream into nitrogen dioxide, wherein the oxidation catalytic converter (4, 4') for converting nitrogen monoxide into nitrogen dioxide preferably contains, as active material, platinum and/or platinum oxide and/or zeolites.

11. The exhaust-gas aftertreatment system according to Claims 1, 4 or 6, **characterized in that** the particle filter (5, 9, 9') is additionally coated or impregnated on the outflow side (12), at the end of the region laden with SCR-active catalyst material (6, 14, 14') as seen in the direction of flow of the exhaust gas, with a material (15, 15') which oxidizes excess ammonia present in the exhaust gas.

12. The exhaust-gas aftertreatment system according to Claim 11, **characterized in that** the material (15, 15') for the oxidation of excess ammonia contains elements from the platinum group and/or the oxides thereof and/or zeolites.

13. The exhaust-gas aftertreatment system according to one of the preceding claims, **characterized in that** the particle filter (5, 9, 9') forms blind-hole-like chambers (11a, 11a', 12a, 12a') both on its inflow side (11) and on its outflow side (12), those which are located on the inflow side (11) being open towards the inflow side and those which are located on the outflow side (12) being open towards the outflow side.

14. The exhaust-gas aftertreatment system according to Claim 13, **characterized in that** the outflow-side, blind-hole-like chambers (12, 12a) of the particle filter (5, 9, 9') have intermediate walls as fixtures (23, 23'), wherein the intermediate walls run substantially parallel to the direction of flow of the exhaust gas in such a manner that the outflow-side, blind-hole-like chambers (12a, 12a') are divided into a plurality of sub-chambers.

## Revendications

1. Système de traitement postérieur de gaz d'échappement pour la réduction des oxydes d'azote et des particules dans des moteurs à combustion, la réduction des oxydes d'azote ayant lieu au moyen d'un catalyseur et la réduction des particules au moyen d'un filtre à particules, et
- un filtre à particules (5, 9, 9') traversé par le gaz d'échappement étant agencé dans le courant de gaz d'échappement du moteur à combustion,
- le filtre à particules (5, 9, 9') étant un filtre céramique,
- le filtre à particules (5, 9, 9') présentant sur son côté de sortie (12) une surface géométrique plus grande que sur le côté d'entrée (11),
- le filtre à particules (5, 9, 9') étant chargé au moins dans la zone de la surface géométrique plus grande avec un matériau catalytique pour la réduction des oxydes d'azote,
- la surface géométrique plus grande du filtre à particules (5, 9, 9') étant formée sur le côté de sortie (12) par un façonnage particulier du matériau de filtration et/ou par des composants internes (23, 23'),
- le filtre à particules (5, 9, 9') étant fabriqué par extrusion et comprenant des canaux parallèles, **caractérisé en ce que**
- les densités cellulaires varient sur la section du filtre à particules (5, 9, 9'),
- des zones de densité cellulaire plus élevée sont adjacentes à des zones de densité cellulaire plus faible,
- les zones de densité cellulaire plus élevée sont fermées en direction du côté d'entrée (11) et ouvertes en direction du côté de sortie (12),
- les zones de densité cellulaire plus faible sont fermées, en direction du côté de sortie (12) et ouvertes en direction du côté d'entrée (11),
- le gaz d'échappement qui s'écoule sur le filtre à particules (5, 9, 9') atteint par le biais des ouvertures du côté de l'entrée les zones de densité cellulaire plus faible, s'écoule au travers des parois des canaux dans
- les zones de densité cellulaire plus élevée, et sort du filtre à particules (5, 9, 9') depuis celles-ci par le biais des ouvertures du côté de la sortie,
- au moins le côté de sortie du filtre à particules est chargé avec un matériau catalytique pour la réduction des NOₓ.

2. Système de traitement postérieur de gaz d'échappement selon la revendication 1, **caractérisé en ce que** la surface géométrique plus grande sur le côté de sortie (12) du filtre à particules (5, 9, 9'), y compris les composants internes éventuellement présents (23, 23'), est au moins 30 % plus grande que la surface géométrique sur le côté d'entrée (11).

3. Système de traitement postérieur de gaz d'échappement selon l'une quelconque des revendications précédentes, **caractérisé en ce que** le filtre à particules (5, 9, 9') et/ou les composants internes éventuellement présents (23, 23') pour l'agrandissement de la surface sont constitués de cordiérite extrudée et/ou de carbure de silicium et/ou de titanate d'aluminium, et le côté de sortie (12) du filtre à particules et/ou les composants internes éventuellement présents (23, 23') sont chargés avec un matériau catalytique pour la réduction des NOₓ, et le filtre à particules (5, 9, 9') comprend pour l'agrandissement de la surface du côté de sortie des composants internes (23, 23'), le filtre à particules (5, 9, 9') et les composants internes (23, 23') formant une unité fixe.

4. Système de traitement postérieur de gaz d'échappement selon l'une quelconque des revendications précédentes, **caractérisé en ce que** des matériaux qui forment un catalyseur SCR ou un catalyseur à accumulation de NOₓ ou un catalyseur à trois voies sont utilisés pour la réduction des NOₓ.

5. Système de traitement postérieur de gaz d'échappement selon l'une quelconque des revendications précédentes, **caractérisé en ce que** le chargement avec le matériau catalytique sur le côté de sortie (12) du filtre à particules (5, 9, 9') augmente dans la direction d'écoulement du gaz d'échappement, le filtre à particules (5, 9, 9') et les composants internes (23, 23') étant fabriqués avec des matériaux catalytiques différents ou des matériaux présentant un chargement catalytique différent.

6. Système de traitement postérieur de gaz d'échappement selon l'une quelconque des revendications précédentes, **caractérisé en ce que** le matériau catalytique à action SCR (6, 14, 14') formant un catalyseur SCR (6, 14) contient en tant que composant actif du vanadium et/ou V₂O₅ et/ou WO₃/TiO₂ et/ou des zéolithes contenant du fer et/ou des zéolithes contenant du cuivre et/ou des zéolithes contenant du cobalt.

7. Système de traitement postérieur de gaz d'échappement selon l'une quelconque des revendications précédentes, **caractérisé en ce que** le matériau formant un catalyseur à accumulation de NOₓ contient en tant que composants actifs du platine et/ou du palladium et/ou du rhodium et/ou du baryum et/ou du calcium.

8. Système de traitement postérieur de gaz d'échappement selon la revendication 1, **caractérisé en ce que** le filtre à particules (5, 9, 9') est en outre chargé sur le côté d'entrée (11) avec un matériau catalytique qui favorise le clivage de l'ammoniac d'un réducteur clivant l'ammoniac ajouté dans le courant de gaz d'échappement en amont du filtre à particules (5, 9, 9'), et la surface géométrique plus grande est chargée avec un matériau catalytique à action SCR (6, 14, 14'), qui y forme un catalyseur SCR.

9. Système de traitement postérieur de gaz d'échappement selon la revendication 8, **caractérisé en ce que** le matériau catalytique qui favorise le clivage de l'ammoniac par le réducteur contient en tant que composant actif TiO₂ et/ou TiO₂/SiO₂ et/ou TiO₂/SiO₂/Al₂O₃ et/ou des zéolithes.

10. Système de traitement postérieur de gaz d'échappement selon l'une quelconque des revendications précédentes, **caractérisé en ce qu'**un catalyseur d'oxydation (4, 4') est agencé en amont du filtre à particules, et transforme au moins une partie du monoxyde d'azote contenu dans le courant de gaz d'échappement en dioxyde d'azote, le catalyseur d'oxydation (4, 4') pour la transformation de monoxyde d'azote en dioxyde d'azote contenant de préférence en tant que matériau actif du platine et/ou de l'oxyde de platine et/ou des zéolithes.

11. Système de traitement postérieur de gaz d'échappement selon les revendications 1, 4 ou 6, **caractérisé en ce que** le filtre à particules (5, 9, 9') est en outre revêtu ou imprégné sur le côté de sortie (12), dans la direction d'écoulement du gaz d'échappement à la fin de la zone chargée avec un matériau catalytique à action SCR (6, 14, 14'), avec un matériau (15, 15') qui oxyde l'ammoniac en excès présent dans le gaz d'échappement.

12. Système de traitement postérieur de gaz d'échappement selon la revendication 11, **caractérisé en ce que** le matériau (15, 15') pour l'oxydation de l'ammoniac en excès contient des éléments du groupe du platine et/ou leurs oxydes et/ou des zéolithes.

13. Système de traitement postérieur de gaz d'échappement selon l'une quelconque des revendications précédentes, **caractérisé en ce que** le filtre à particules (5, 9, 9') forme des chambres à trou non débouchant (11a, 11a', 12a, 12a') aussi bien sur son côté d'entrée (11) que sur son côté de sortie (12), celles disposées sur le côté d'entrée (11) débouchant vers le côté d'entrée et celles disposées sur le côté de sortie (12) débouchant vers le côté de sortie.

14. Système de traitement postérieur de gaz d'échappement selon la revendication 13, **caractérisé en ce que** les chambres à trou non débouchant (12, 12a) du côté de sortie du filtre à particules (5, 9, 9') comprennent en tant que composant internes (23, 23') des parois intermédiaires, les parois intermédiaires étant essentiellement parallèles à la direction d'écoulement du gaz d'échappement, de sorte que les chambres à trou non débouchant (12a, 12a') du côté de sortie soient divisées en plusieurs chambres partielles.
